**Europäisches Patentamt**

**European Patent Office**

**Office européen des brevets**

(11) Veröffentlichungsnummer: **0 085 873 B2**

(12) **NEUE EUROPÄISCHE PATENTSCHRIFT**

(45) Veröffentlichungstag der neuen Patentschrift:
08.05.91 Patentblatt 91/19

(21) Anmeldenummer: 83100550.9

(22) Anmeldetag: 22.01.83

(51) Int. Cl.⁵: **G01M 1/22**

(54) Verfahren und Vorrichtung zur Positionierung von auszuwuchtenden Werkstücken.

(30) Priorität: 05.02.82 DE 3204016

(43) Veröffentlichungstag der Anmeldung:
17.08.83 Patentblatt 83/33

(45) Bekanntmachung des Hinweises auf die
Patenterteilung:
11.06.86 Patentblatt 86/24

(45) Bekanntmachung des Hinweises auf die
Entscheidung über den Einspruch:
08.05.91 Patentblatt 91/19

(84) Benannte Vertragsstaaten:
DE FR GB

(56) Entgegenhaltungen:
EP-A- 0 045 505
EP-A- 0 074 416
DE-A- 1 648 512

(56) Entgegenhaltungen:
DE-A- 2 548 729
US-A- 4 193 305
"Greiner Technical Tribune", Firmendruckschrift der Greiner Electronic AG Nr.1, 1966
Dokumentation eines Vortrags für Service-
Techniker der Greiner-Electronic AG, gehalten
am 21./22. Dez. 1966
"Industrie-Anzeiger", 102. Jg.,Nr.10, 1980
"Elektronik-Anzeiger", 2.Jg., Nr.2, 1970

(73) Patentinhaber: Reutlinger, Wolf-Dieter
Novalisstrasse 5
W-6100 Darmstadt (DE)

(72) Erfinder: Reutlinger, Wolf-Dieter
Novalisstrasse 5
W-6100 Darmstadt (DE)

(74) Vertreter: Weisse, Jürgen, Dipl.-Phys. et al
Bökenbusch 41 Postfach 11 03 86
W-5620 Velbert 11-Langenberg (DE)

EP 0 085 873 B2

**Beschreibung**

Die Erfindung betrifft ein Verfahren zur Positionierung eines auszuwuchtenden Werkstückes, so daß die gemessene Unwucht eine vorgegebene Lage einnimmt.

Die nicht vorveröffentlichte, ältere EP-A-74 416 (Stand der Technik nach Art. 54 (3)EPÜ) betrifft ein Verfahren zum Übertragen einer gemessenen Unwuchtwinkellage auf eine Ausgleichseinrichtung eines auszuwuchtenden Werkstücks. Es ist kein rotierender Teil vorgesehen, der mit dem auszuwuchtenden Werkstück synchron umläuft. An einem rotierenden Teil der Auswuchtmaschine, z. B. einer Tragrolle oder dem Antriebsmotor eines Treibriemens, ist ein Impulsgeber angebracht. Das Werkstück trägt eine Marke, die berührungslos abgetastet wird und ein Referenzsignal liefert. Eine übliche Signalverarbeitungsschaltung liefert den Unwuchtwinkel relativ zu der Marke. Eine Zähler zählt die während einer vollen Umdrehung von einem Referenzsignal zum nächsten von dem Impulsgeber abgegeben Winkelinkrementsignale. Der gemessene Unwuchtwinkel wird auf die einer vollen Umdrehung entsprenchende Zahl von Winkelinkrementsignalen bezogen, so daß eine Zahl erhalten wird, die den Unwuchtwinkel darstellt. Anhand dieser Zahl und der im Zähler gezählten Winkelinkrementsignale wird das auszuwuchtende Werkstück positioniert.

Die ebenfalls nicht vorveröffentlichte, ältere EP-A-45 505 (Stand der Technik nach Art 54(3)EPÜ) betrifft eine Auswuchtmaschnine, die keinerlei Referenzmarke oder Referenzsignal vervwendet und mittels einer mit dem Werkstück synchron umlaufenden Kodierscheibe und eines Vorwahlzählers beim Auslaufen des Werkstückes die Unwucht in einer definierten Stellung zum Stillstand bringt. Es braucht dann zwar keine Markierun auf das Werkstück aufgebracht zu werden. Die Unwuchtlageinformation geht jedoch verloren, sobald das Werkstück von der Maschine heruntergenommen wird.

Es ist bekannt, die Unwucht eines Werkstücks auf einer Unwuchtmeßmaschine zu messen, bei welcher das Werkstück während der Messung von einem Antrieb abgekuppelt wird und frei ausläuft (US-A-3 076 342). Eine solche Art der Messung hat den Vorteil, daß Einflüsse des Antriebs auf die Unwuchtmessung ausgeschaltet werden. Auf das Werkstück wird eine Marke aufgebracht, die durch eine photoelektrische Abtastvorrichtung abgetastet wird. Die photoelektrische Abtastvorrichung liefert ein Referenzsignal. Die Phasenlage eines von der Unwuchtmeßmaschine gelieferten Unwuchtmeßsignals zu diesem Referenzsignal entspricht der Winkellage der gemessenen Unwucht relativ zu der auf das Werkstück aufgebrachten Marke. Bei der US-A-3 076 342 wird die Anzeige eines Unwuchtanzeigegeräts verriegelt, wenn das Werkstück im Auslauf durch eine Nenndrehzahl hindurchgeht. Es erfolgt so eine Speicherung des Meßwerts.

Es ist auch bekannt, ein auszuwuchtendes Werkstück mittels eines Riemens, durch Druckluft oder durch ein elektromagnetisches Feld anzutreiben. In allen diesen Fällen kann als Referenz für die Unwuchtlage nicht ein mit dem Werkstück gekuppelter Antriebsmotor dienen. Vielmehr wird eine Referenzsignal ähnlich wie bei der US-A-3 076 342 durch Abtasten des Werkstücks und einer darauf angebrachten Marke erzeugt.

Statt einer "mechanischen" Speicherung der Unvuchtmeßsignale wie bei der US-A-3 076 342 kinn auch eine elektrische Speicherung vorgesehen werden. Die elektrisch gespeicherten Unwuchtmeßsignale können einer Unwuchtausgleichsmaschiene zum automatischen Unwuchtausgleich zugeführt werden (z. B. US-A-3 446 100 oder US-A-2 779 217, US-A-4 214 481).

Für den Unwuchtausgleich ist es erforderlich, die Unwucht in eine bestimmte Lage zu drehen, beispielsweise unter eine Bohrmaschine, die zum Unwuchtausgleich Material von dem Werkstück abnimmt. Wenn der Meßlauf ohne formschlüssigen Antrieb des Werkstücks erfolgt, dann bietet dies gewisse Schwierigkeiten. Es ist auf dem Werkstück eine Marke angebracht, die das Referenzsignal liefert und eine Referenzlängsebene an dem Werkstück definiert. Die Unwuchtmeßmaschine liefert als Anzeige einen Unwuchtlagewinkel, d.h. einen Winkel, um den die Unwuchtlage gegenüber der Referenzlängsebene versetzt ist. Es ist nun keineswegs einfach, daraus die genaue Stelle des Werkstücks zu finden, an der die Unwucht ausgeglichen werden muß. Wenn das Werkstück über eine Kupplung in definierter Winkellage mit einem Antriebsmotor verbunden ist, dann kann an dem Antriebsmotor eine Winkelskala angebracht und das Werkstück zusammen mit dem Antriebsmotor nach dieser Skala in eine den gespeicherten Unwuchtlagewinkel entsprechende Stellung verdreht werden. Wenn eine solche Kupplung aber fehlt, ist diese Art der Positionierung nicht möglich.

Es ist bekannt, mit Skalen versehene Haftetiketten oder Skalenscheiben mit Magnethalterung zentriert an eines der Wellenenden des Werkstücks so anzukleben bzw. anzusetzen, daß der Skalenanfang in Richtung der referenzsignalerzeugenden Marke zeigt. Nach dieser Skala wird dann das Werkstück für den Unwuchtausgleich eingestellt. Da diese Skalen im Abstand von der Ausgleichsebene angebracht werden, in der die Marke sitzt, ist es in der Praxis schwierig, das Haftetikett oder die Skalenscheibe, korrekt aufzusetzen. Ungenauigkeiten in der Übertragung des gemessenen Unwuchtlagewinkels führen zu Fehlern des Unwuchtausgleichs. Dadurch werden zusätzliche Meßläufe und zusätzlichte Ausgleichsvorgänge erforderlich.

Es ist weiter bekannt, Skalenscheiben an kupplungslos angetrieben, auszuwuchtenden Werkstücken fest anzubringen. Auch diese Verfahren haben sich in der Praxis nicht bewährt. Skalenscheiben aus Folie oder Papier können sich während des Meßlaufs ablösen und wegfliegen. Es sind Kunststoffhülsen bekannt, die mit einer Winkelskala versehen und auf das Wellenende aufgesetzt sind. Diese können sich aber leicht verdrehen. Durch ihre Masse und ihre Passungstoleranz beeinträchtigen sie die erreichbare Auswuchtgenauigkeit. Dadurch geht der Vorteil erhöhter Auswuchtgenauigkeit, der durch einen kupplungslosen Antrieb erreicht werden soll, wieder verloren. Auf jeden Fall ist diese Methode nur mit bestimmten, vorbereiteten Werkstücken anwendbar. Sie ist nicht geeignet zum Auswuchten eines beliebigen einzelnen Werstücks. Es ist weiterhin bekannt, auf das Werkstück eine Winkelverteilung aufzudrucken oder um die Peripherie des Werkstücks ein Skalenband herumzulegen. Das Skalenband muß dabei in seiner Länge genau an den Werkstückumfang angepaßt sein.

Das ist nur bei der Auszuchtung größerer Serien von übereinstimmenden Werkstücken wirtschaftlich vertretbar. Diese Methode ist auf jeden Fall nicht für Einzelstücke brauchbar.

Es ist eine Vorrichtung bekannt (DE-A-2 852 468), die an den Umfang des Werkstücks am Ort der das Referenzsignal erzeugenden Marke angehalten oder dort magnetisch befestigt wird. Diese Vorrichtung enthält eine als Pendel drehbar äufgehängte Masse. An der Masse sitzt ein Zeiger, der somit stets vertikal ausgerichtet ist. Dieser Zeiger ist über einer an der Vorrichtung vorgesehenen Winkelskala beweglich. Bei der Verdrehung des Werkstücks, bei der auch die Vorrichtung gegenüber der Vertikalen mit verdreht wird, dreht sich der Zeiger vor der Winkelskala und zeigt den Drehwinkel des Werkstücks an. Das Werkstück wird dann so lange um seine Achse verdreht, bis der Zeiger auf der Winkelskala den gemessenen Unwuchtlagewinkel anzeigt. Die Handhabung dieser Vorrichtung ist bei vielen Werkstücken umständlich oder unmöglich.

Es sind Auswuchtmaschinen bekannt, bei denen während des Meßlaufs auf der Unwuchtmeßmaschine bei jedem Umlauf des Werkstücks aus einem üblicherweise sinusförmigen Unwuchtmeßsignal ein impulsartiges Unwuchtlagesignal erzeugt wird, das eine feste, vorgegebene Phasenbeziehung zu dem Unwuchtmeßsignal hat. Ein solches Unwuchtlagesignal dient zum Ansteuern eines Stroboskops, welches das umlaufende Werkstück beleuchtet. Auf dem Umfang des Werkstücks ist eine Winkelskala angebracht, auf der bei stroboskopischer Betrachtung die Lage der Unwucht abgelesen werden kann.

Eine bekannte Auswuchtmaschine BALANCE-O-MATIC arbeitet mit einem Oszillator, der unabhängig von dem Auswucht vorgang mit einer genau definierten frequenz schwingt. Dementsprenchend muß die Auswuchtung ebenfalls bei einer genau definierten Frequenz erfolgen. Wenn das Werkstück, hier eine Unruh, mit dieser Frequenz umläuft, dann entspricht jeder Impuls des Oszillators einem definierten Winkelinkrement des Werkstücks, nämlich einem Drehwinkel des Werstücks um 0.5°. Durch die Abstimmung von Umlaufdrehzahl und Oszillatorfrequenz werden gewissermaßen Winkelinkremente der Werkstückdrehung erzeugt. Diese Winkelinkremente der Werkstückdrehung werden von einer Referenzstellung, die durch die Abtastung der "Ellipse" gewonnen wird, bis zu einem aus der Unwuchtschwingung abgeleiteten Unwuchtlageimpuls aufsummiert. Es erfolgt somit praktisch eine digitale Messung der Unwuchtlage. Die Positionierung des Werkstücks in die Bearbeitungslage erfolgt in der Weise, daß durch einen Schrittmotor das Werkstück um diesen digital vorgegebenen Winkel (also z.B. 200 x 0,5° = 100°) verdreht wird.

Wenn bei dieser Anordnung die Abstimmung von Drehzahl des Werkstückes und Frequenz des Oszillators nicht stimmt, funktioniert die gesamte Messung nicht. Wenn etwa die Drehzahl bei gleicher Oszilätorfrequenz um 10% zu hoch ist, dann ist auf einem Winkel von 100° eine Folge von 200/1,1 = 182 Impulsen erschienen. Diese 182 Impulse bewirken beim Unwuchtausgleich eine Verdrehung des Werkstücks gegenüber der Referenzmarke (Ellipse) um einen Winkel von 182 x 0,5° = 91°. Der Unwuchtausgleich würde also an einer um etwa 10° falschen Stelle stattfinden.

Durch die DE-A-2 548 729 ist eine Anordnung der gleichen Art wie die oben schon erwähnte EP-A-74 416 bekannt. Es wird dort der Unwuchtwinkel mit konventionellen Mitteln gemessen und an einem Instrument angezeigt. Um aber die Lage der Unwucht nicht in Form eines u.U. schlecht einstellbaren Winkels zu erhalten, wird nach der DE-A-2548729 der Unwuchtwinkel in Längeneinheiten, die jeweils auf einem Umfang des auszuwuchtenden Körpers beziebar sind umgewandelt. Es kann dann die Bestimmung der Unwuchtlage auf eine Längenmessung längs des Umfanges z.B. mit einem Bandmaß ausgehend von einer Referenzmarke zurückgeführt werden. Der auszuwuchtende Körper ist dor auf Tragrollen gelagert. Die DE-A-2 548 729 offenbart auch eine Positionierung des auszuwuchtenden Körpers anhand der Tragrollen. Es ist dabei eine dem Unwuchtwinkel analoge Spannung vorhanden. Durch zwei Widerstände und werden die Radien der Tragfollen und des Lagerzapfens eingestellt, so daß eine Multiplikation des Unwuchtwinkels mit dem Verhältnis der Radien von Lagerzapfen und Tragrolle erolgt. Damit ergibt sich der dem (konventionell gemessenen) Unwuchtwinkel zugeordnete Tragrollenwinkel. Dieser wird an einem Instrument angezeigt.

Zur Übertragung des Unwuchtwinkels auf den auszuwuchtenden körper wird dieser in Null-Grad-Stellung gebracht. Von hier aus wird er weitergedreht, bis die Tragrolle einen Winkel entsprechend der Anzeige des Instrumentes zurückgelegt hat, was an einer an der Tragrolle angebrachten Winkelskala abgelesen werden kann.

Die Winkeleinstellung erfolgt dort also nach einem angezeigten Winkel, allerdings nicht am auszuwuchtenden Körper selbst sondern an den Tragrollen nach Umrechnung des gemessenen Unwuchtwinkels.

Der Erfindung liegt die Aufgabe zugrunde, ein Verfahren und eine Vorrichtung zur Positionierung von auszuwuchtenden Werkstücken zu schaffen, die eine Positionierung von beliebigen Werkstücken ohne Anbringung von Zusatzteilen wie Skalenscheiben o. dgl. auf denselben gestatten.

Das erfindungsgemäße Verfahren umfaßt die Verfahrensschritte

(a) Lagerung des Werkstücks auf Tragrollen in einer Unwuchtmeßmaschine,

(b) Antreiben des Werkstücks in einem Meßlauf zur Erzeugung von Unwuchtkräften,

(c) Erzeugung eines die Unwucht nach Größe und Lage Wiedergebenden Unwuchtmeßsignals während des Meßlaufes,

(d) Erzeugen eines die Phasenlage des Unwuchtmeßsignals repräsentierenden Unwuchtlagesignals aus dem Unwuchtmeßsignal,

(e) Erzeugung eines Referenzsignals bei jedem Umlauf des Werkstücks, wenn das Werkstück eine bestimmte vorgegebene Winkellage einnimmt,

(f) Erzeugung von Folgen von Winkelinkrementsignalen mittels eines Winkelinkrementsignalgebers, der mit einer der Tragrollen und ihrer Drehung gekoppelt ist und jeweils bei DRehung der Tragrolle um ein festes Winkelinkrement ein Signal abgibt,

(g) Zählen der Winkelinkrementsignale von dem Referenzsignal bis zu dem impulsartigen Unwuchtlagesignal,

(h) Speichern des Ergebnisses der Zählung und

(i) Positionierung durch Drehen des Werkstücks in Drehtichtung des Meßlaufes auf den gleichen oder mit diesen übereinstimmenden Tragrollen in der Weise, daß ausgehend von der für die Erzeugung des Referenzsignals herangezogenen vorgegebenen Winkellage Winkelinkrementsignale gezählt werden, die von einem mit der Drehung der Tragrolle gekoppelten Winkelinkrementsignalgeber stammen und den gleichen festen Winkelinkrementen wie beim Meßlauf zugeordnet sind, bis die Anzahl der so gezählten Winkelinkrementsignale dem gespeicherten Ergebnis der bei dem Meßlauf durchgeführten Zählung entspricht, wobei dann die Unwucht des Werkstückes an einer vorgegebenen Stelle liegt.

Es wird also ein Maß für die vorzunehmende Drehung aus der Drehung der Tragrolle gewonnenen, auf welcher das auszuwuchtende Werkstück gelagert ist. Der Drehwinkel der Tragrolle wird durch Zählung der Winkelinkrementsignale bestimmt, die von dem Referenzsignal bis zu dem Unwuchtlagesignal gezählt werden. Der einem bestimmten Drehwinkel des Werkstücks zugeordnete Drehwinkel der Tragrolle und damit die Anzahl der Winkelinkrementsignale hängt von dem Durchmesserverhältnis von Werkstückswelle und Tragrolle ab. Wenn aber die Positionierung des Werkstücks auf den gleichen oder übereinstimmenden Tragrollen erfolgt, dann hebt sich dieses Verhältnis wieder heraus.

Eine Vorrichtung zur Durchführung des Verfahrens mit einer Unwuchtmeßmaschine, bei welcher das Winkelstück auf Tragrollen gelagert ist, enthaltend

a) eine Einrichtung zur Erzeugung von Unwuchtmeßsignalen, welche die zu messende Unwucht des Werkstücks nach Größe und Lage wiedergeben,

b) eine berührungslos arbeitende Abtastvorrichtung durch welche eine Marke auf dem Werkstück zur Erzeugung eines Referenzsignals abtastbar ist, wobei in einer vorgegebenen Winkellage die Marke von der Abtastvorrictung erfaßt wird,

c) einen Signalformer, auf den das Unwuchtmeßsignal ausgeschaltet ist, zur Erzeugung eines impulsartigen Unwuchtlagesignals, das eine feste, vorgegebene Phasenbeziehung zu dem Unwuchtmeßsignal hat,

d) einen Zähler, der von dem Referenzsignal ein- und von dem impulsartigen Unwuchtlagesignal ausschaltbar ist,

e) Mittel zur Erzeugung einer Zählsignalfolge, deren Zählsignale in Beziehung zum Umlauf des Werkstücks stehen und auf den Zähler aufgeschaltet sind, und

f) Mittel zum Verdrehen des Werkstücks ausgehend von einer vorgegebenen Winkellage, in welcher die Marke ein Referenzsignal erzeugt, um einen Winkel, der durch den Zählerstand bestimmt ist,

dadurch gekennzeichnet, daß

g) das Werstück in der Unwuchtmeßmaschine auf Tragrollen gelagert ist,

h) an einer der Tragrollen der Unwuchtmeßmaschine ein Winkelinkrementsignalgeber angebracht ist, der als die besagten Zählsignale eine Folge von durch die Drehung dieser Tragrolle gesteuerten, je einem festen Winkelinkrement der Tragrolle entsprechenden Winkelinkrementsignalen erzeugt, und

i) das Werkstück durch die Mittel zur Verdrehung des Werkstücks auf den gleichen oder übereinstimmenden Tragrollen verdrehbar ist zur Positionierung der Unwucht in eine vorgegebene Winkellage und

j) die besagten Mittel zur Verdrehung des Werkstücks in Abhängigkeit von tragrollenbezogenen Winkelinkrementsignalen von dem gleichen oder einem mit einer mit der besagten Tragrolle übereinstimmenden Tragrolle und ihrer Drehung gekoppelten Winkelinkrementsignalgeber ansteuerbar sind, bis die Anzahl der tragrollenbezogenen Winkelinkrementsignale dem Zählerstand des Zählers entspricht.

Ausgestaltungen des Verfahrens sind Gegenstand der Patentansprüche 2 bis 6.

Ausgestaltungen der Vorrichtung sind Gegenstand der Patentansprüche 8 bis 15.

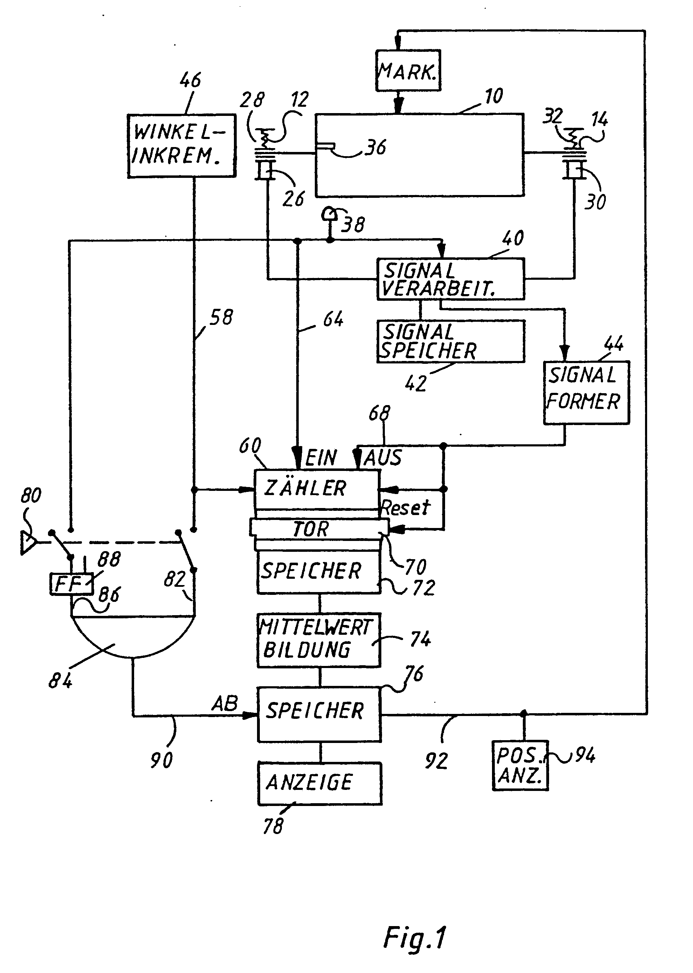

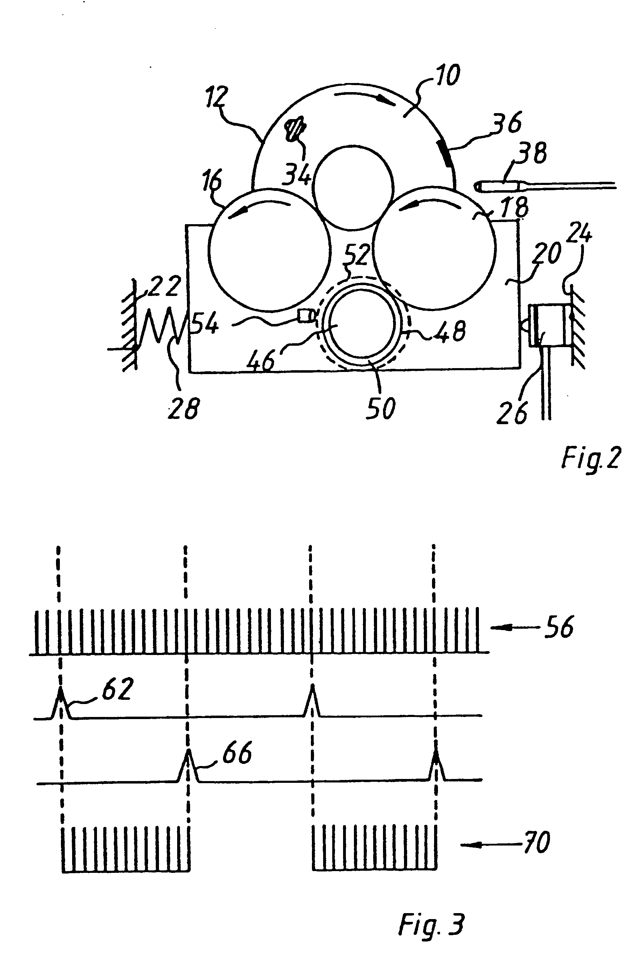

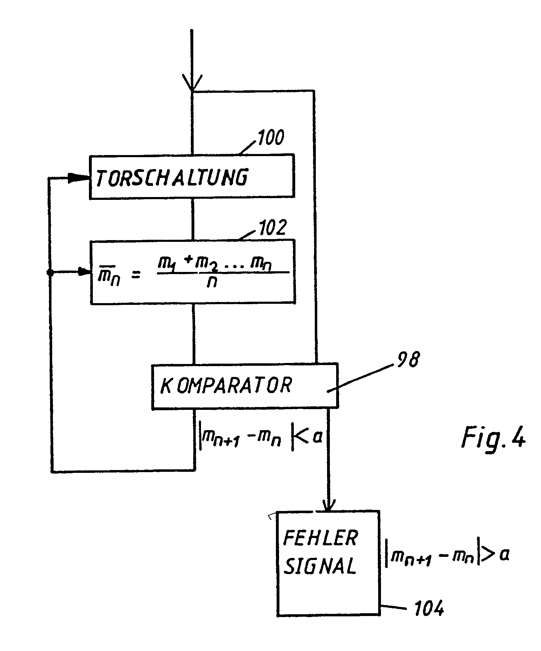

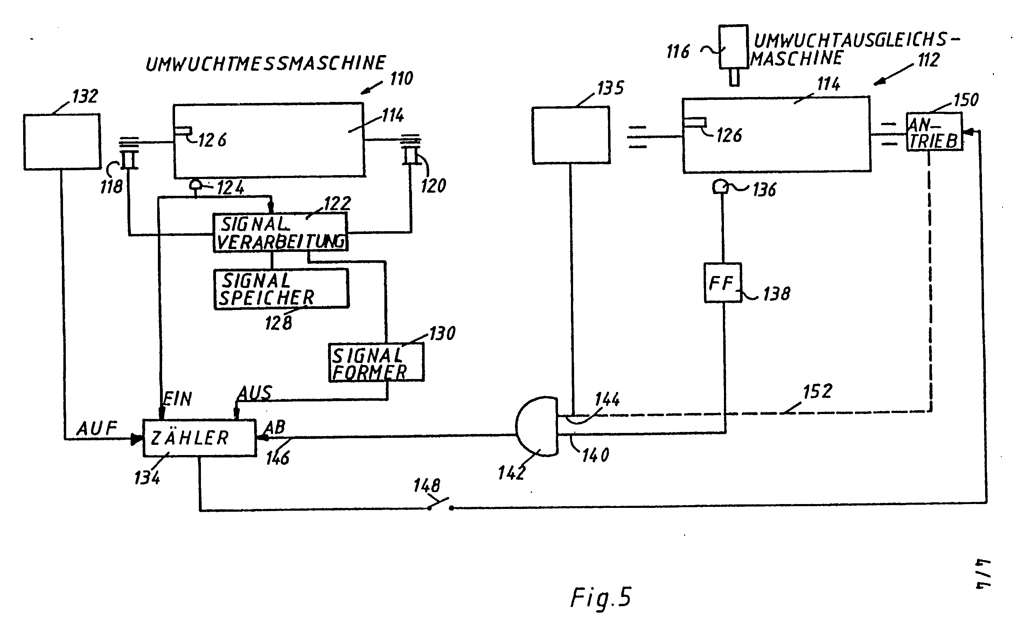

## Ansprüche

1. Verfahren zur Positionierung eines auszuwuchtenden Werkstücks so, daß die gemessene Unwucht eine vorgegebene Lage einnimmt,
mit den Verfahrensschritten
(a) Lagerung des Werkstücks auf Tragrollen in einer Unwuchtmeßmaschine,
(b) Antreiben des Werkstücks in einem Meßlauf zur Erzeugung von Unwuchtkräften,
(c) Erzeugung eines die Unwucht nach Größe und Lage wiedergebenden Unwuchtmeßsignals während des Meßlaufes,
(d) Erzeugen eines die Phasenlage des Unwuchtmeßsignals repräsentierenden Unwuchtlagesignals aus dem Unwuchtmeßsignal,
(e) Erzeugung eines Referenzsignals bei jedem Umlauf des Werkstücks, wenn das Werkstück eine bestimmte vorgegebene Winkellage einnimmt,
(f) Erzeugung von Folgen von Winkelinkrementsignalen mittels eines Winkelinkrementsignalgebers (46), der mit einer der Tragrollen (18) und ihrer Drehung gekoppelt ist und jeweils bei Drehung der Tragrolle (18) um ein festes Winkelinkrement ein Signal abgibt.
(g) Zählen der Winkelinkrementsignale von dem Referenzsignal bis zu dem impulsartigen Unwuchtlagesignal,
(h) Speichern des Ergebnisses der Zählung und
(i) Positionierung durch Drehen des Werkstücks in Drehtchtung des Meßlaufes auf den gleichen oder mit diesen übereinstimmenden Tragrollen in der Weise, daß ausgehend von der für die Erzeugung des Referenzsignals herangezogenen vorgegebenen Winkellage Winkelinkrementsignale gezählt werden, die von einem mit der Drehung der Tragrolle (18) gekoppelten Winkelinkrementsignalgeber (48) stammen un den gleichen festen Winkelinkrementen wie beim Meßlauf zugeordnet sind, bis die Anzahl der so gezählten Winkelinkrementsignale dem gespeicherten Ergebnis der bei dem Meßlauf durchgeführten Zählung entspricht, wobei dann die Unwucht des Werkstückes an einer vorgegebenen Stelle liegt.

2. Verfahren nach Anspruch 1, dadurch gekennzeichnet, daß
a) bei jedem Meßlauf die Anzahl der zwischen Referenzsignal (62) und Unwuchtlagesignal (66) auftretenden Winkelinkrementsignale (70) für eine Mehrzahl von Umläufen des Werkstücks bestimmt wird und
b) aus den so erhaltenen Anzahlen von Winkelinkrementsignalen ein Mittelwert gebildet und abgespeichert wird.

3. Verfahren nach Anspruch 2, dadurch gekennzeichnet, daß
a) die zu mittelnden Anzahlen der Winkelinkrementsignale miteinander verglichen werden und
b) nur Solche Anzahlen von Winkelinkrementsignälen für die Mittelwertbildung herangezogen werden, deren Abweichungen von den anderen unterhalb eines vorgegebenen Schwellwerts liegen und
c) ein Fehlersignal ausgelöst wird, wenn eine Abweichung oberhalb des Schwellwertes liegt.

4. Verfahren nach einem der Ansprüche 1 bis 3, dadurch gekennzeichnet, daß die Positionierung des Werkstücks (10) auf der Unwuchtmeßmaschine erfolgt.

5. Verfahren nach Anspruch 4, dadurch gekennzeichnet, daß das Werkstück (10) in der vorgegebenen Lage mit einer die Lage der Unwucht angebenden Markierung versehen wird.

6.Verfahren nach einem der Ansprüche 1 bis 3, dadurch gekennzeichnet, daß
a) die Positionierung des Werkstücks (114) auf einer von der Unwuchtmeßmaschine (110) getrennten Unwuchtausgleichsmaschine (112) erfolgt, auf welcher das Werkstück (114) auf Tragrollen gelagert ist, deren Durchmesser gleich dem Durchmesser der Tragrollen der Unwuchtmeßmaschine (110) ist.
b) bei jeder Umdrehung einer der Tragrollen der Unwuchtausgleichsmaschine (110) eine Folge von damit synchronisierten Winkelinkrementsignalen erzeugt wird, die gleichen Winkelinkrementen entsprechen wie die bei dem Meßlauf erzeugten Winkelinkrementsignale,
c) bei der Positionierung des Werstücks (114) auf der Unwuchtausgleichsmaschine (112) ein Referenzimpuls erzeugt wird, wenn das Werkstück (114) eine bestimmte vorgegebene Winkellage auf der Unwuchtausgleichsmaschine (112) einnimmt,
d) die bei der Positionierung des Werstück (114) auf der Unwuchtausgleichsmaschine (112) erzeugten Winkelinkrementsignale von diesem letzteren Referenzimpuls an gezählt werden und
e) die so gezählte Anzahl mit der auf der Unwuchtmeßmaschine (110) ermittelten und gespeicherten Anzähl verglichen wird, wobei bei vorgegebener Beziehung dieser Anzählen der Positioniervorgang beendet wird.

7. Vorrichtung zur Durchführung des Verfahrens nach Anspruch 1 mit einer Unwuchtmeßmaschine, enthaltend

    a) eine Einrichtung (40, 122) zur Erzegung von Unwuchtmeßsignalen, welche die zu messende Unwucht des Werkstücks (10, 114) nach Größe und Lage wiedergeben,

    b) eine berührungslos arbeitende Abtastvorrichtung (38, 124), durch welche eine Marke (36,126) auf dem Werkstück (10, 114) zur Erzeugung eines Referenzsignals (62) abtastbar ist, wobei in einer vorgegebenen Winkellage die Marke (36, 126) von der Abtastvorrichtung (38, 124) erfaßt wird,

    c) einen Signalformer (44, 130), auf den das Unwuchtmeßsignal aufgeschaltet ist, zur Erzeugung eines impulsartigen Unwuchtlagesignals, das eine feste, vorgegebene Phasenbeziehung zu dem Unwuchtmeßsignal hat,

    d) einen Zähler (60, 134), der von dem Referenzsignal (62) ein- und von dem impulsartigen Unwuchtlagesignal ausschaltbar ist,

    e) Mittel zur Erzeugung einer Zählsignalfolge, deren Zählsignale in Beziehung zum Umlauf des Werkstücks stehen und auf den Zähler (60, 134) aufgeschaltet sind, und

    f) Mittel zum Verdrehen des Werkstücks (10, 114) ausgehend von einer vorgegebenen Winkellage, in welcher die Marke (36, 126) ein Referenzsignal erzeugt, um einem Winkel, der durch den Zählerstand bestimmt ist,

**dadurch gekennzeichnet, daß**

    g) das Werkstück (10, 114) in der Unwuchtmeßmaschine auf Tragrollen (16, 18) gelagert ist,

    h) an einer der Tragrollen (18) der Unwuchtmeßmaschine (110) ein Winkelinkrementsignalgeber (46) angebracht ist, der als die besagten Zählsignale eine Folge von durch die Drehung dieser Tragrolle (18) gesteuerten, je einem festen Winkelinkrement der Tragrolle (18) entsprechenden Winkelinkrementsignalen erzeugt, und

    i) das Werkstück (10, 114) durch die Mittel zur Verdrehung des Werkstücks auf den gleichen oder übereinstimmenden Tragrollen verdrehbar ist zur Positionierung der Unwucht in eine vorgegebene Winkellage und

    j) die besagten Mittel zur Verdrehung des Werkstücks (10, 114) in Abhängigkeit von Winkelinkrementsignalen von dem gleichen (46) oder einem mit einer mit der besagten Tragrolle übereinstimmenden Tragrolle und ihrer Drehung gekoppelten Winkelinkrementsignalgeber (150) ansteuerbar sind, bis die Anzähl der tragrollenbezogenen Winkelinkrementsignale dem Zählerstand des Zählers (60, 134) entspricht.

8. Vorrichtung nach Anspruch 7, dadurch gekennzeichnet, daß zur Bestimmung des Drehwinkels des Werkstücks (10, 114)

    a) ein Zähler (76, 134), der auf die gespeicherte Anzahl von Winkelinkrementsignalen gesetzt ist, durch weitere Winkelinkremensignale von das Werstück (10, 114) lagernden Tragrollen (18) abwärtszähler ist und

    b) die Abwärtszählung durch ein bei Abtastung der Marke (36, 126) auf dem Werkstück (10, 114) erzeugtes Referenzsignal einleitbar ist, wobei ein vorgegebener Zählerstand dieses Zählers (76, 134) die richtige Positionierung des Werkstücks (10, 114) signalisiert.

9. Vorrichtung nach Anspruch 8, dadurch gekennzeichnet, daß

    a) der Winkelinkrementsignalgeber (46, 135) zur Erzeugung drehrichtungsabhängiger Signale eingerichtet ist und

    b) der Zähler (76, 134) ein auf- und abwärtszählender Zähler ist, dessen Zähleinrichtung durch die drehrichtungsabhängigen Signale in Abhängigkeit von der Drehrichtung des Werkstücks (10, 114) bestimt ist.

10. Vorrichtung nach einem der Ansprüche 7 bis 9, dadurch gekennzeichnet, daß der Winkelinkrementsignalgeber einen Teil der Tragrolle bildet.

11. Vorrichtung nach einem der Ansprüche 7 bis 9, dadurch gekennzeichnet, daß der Winkelinkrementsignalgeber (46, 132, 135) ein von der Tragrolle (18) getrennter Bauteil ist, der mit der Tragrolle (18) in Antriebsverbindung steht.

12. Vorrichtung nach einem der Ansprüche 7 bis 11, gekennzeichnet durch

    a) einen Speicher (72), in dem bei einem Meßlauf nacheinander die bei verschiedenen Umläufen des Werkstücks in den Zähler eingezählten Anzahlen von Winkelinkrementsignalen speicherbar sind, und

    b) einen Mittelwertbildner (74) zur Bildung des Mittelwerts der gespeicherten Anzahlen als Maß fur die zur Positionierung der Werstücks erforderliche Verdrehung.

13. Vorrichtung nach einem der Ansprüche 7 bis 12, gekennzeichnet durch eine Markierungsvorrichtung (96) an der Unwuchtmeßmaschine, durch welche nach der Positionierung des Werkstücks (10) eine die Lage an der Unwucht anzeigende Markierung auf das Werstück (10) aufbringbar ist.

14. Vorrichtung nach einem der Ansprüche 7 bis 12, dadurch gekennzeichnet, daß

    a) eine Unwuchtmeßmaschine (110) und eine Unwuchtausgleichsmaschine (112) vorgesehen sind,

    b) die Unwuchtmeßmaschine (110) und die Unwuchtausgleichsmaschine (112) übereinstimmende Tragrollen zur Lagerung des Werkstücks (114) aufweisen,

c) die Unwuchtmeßmaschine (110) und die Unwuchtausgleichsmaschine (112) jeweils an einer Tragrolle einen Winkelinkrementsignalgeber (132, 135) aufweisen, wobei diese beiden Winkelinkrementsignalgeber (132, 135) funktionell übereinstimmend ausgebildet sind,

d) an der Unwuchtmeßmaschine (110) und der Unwuchtausgleichsmaschine (112) je eine berührungslose Abtastvorrichtung (124, 136) angeordnet ist, durch welche jeweils eine Märke (126) auf dem Werkstück (114) zur Erzeugung eines Referenzsignals abtastbar ist und

e) die Aufwärtszählung der Winkelinkrementsignale beim Meßlauf auf der Unwuchtmeßmaschine (110) durch das von der Abtastvorrichtung (124) der Unwuchtmeßmaschine (110) erzeugte Referenzsignal und die Abwärtszählung beim Positionieren auf der Unwuchtausgleichsmaschine (112) durch das von der Abtastvorrichtung (136) der Unwuchtausgleichsmaschine (112) erzeugte Referenzsignal einleitbar ist.

15. Vorrichtung nach einem der Ansprüche 7 bis 14, dadurch gekennzeichnet, daß

a) mit der besagten einen Tragrolle ein Schrittmotor zur Positionierung des Werkstücks gekuppelt ist und

b) der Schrittmotor zugleich den Winkelinkrementsignalgeber bildet, indem die von dem Schrittmotor gelieferten oder dem Schrittmotor zugeführten Schrittschaltsignale als Winkelinkrementsignale dienen.

## Claims

1. Method of positioning a workpiece to be balanced such that the measured unbalance assumes a predetermined position,

with the method steps

(a) mounting the workpiece on supporting rollers in an unbalance measuring machine,

(b) driving the workpiece in a measuring run for generating unbalance forces,

(c) generating an unbalance measuring signal representing the unbalance with respect to amount and position,

(d) generating an unbalance position signal representing the phase position of the unbalance measuring signal from the unbalance measuring signal,

(e) generating a reference signal with each revolution of the workpiece, when the workpiece assumes a particular predetermined angular position,

(f) generating sequences of angle increment signals by means of an angle increment signal generator (46) coupled to one of the supporting rollers (18) and its rotation, and providing a signal with each rotation of the supporting roller (18) through a fixed angle increment,

(g) counting the angle increment signals from the reference signal to the pulse-shaped unbalance position signal,

(h) storing the result of the counting, and

(i) positioning by rotating the workpiece in the rotary direction of the measuring run on the same or identical supporting rollers such that, starting out from the predetermined angular position used for generating the reference signal, angle increment signals are counted, which signals are provided by an angle increment signal generator (48) coupled to the supporting roller (18), and are associated with the same fixed angle increments as during the measuring run, until the number of the thus counted angle increment signals are equal to the stored result of the counting effected during the measuring run, the unbalance of the workpiece being then located at a predetermined location.

2. Method as claimed in claim 1, characterized in that

(a) with each measuring run, the numbers of the angle increment signals (70) occurring between reference signal (62) and unbalance position signal (66) are determined for a plurality of revolutions of the workpiece, and

(b) a mean value is formed from the numbers thus obtained and is stored.

3. Method as claimed in claim 2, characterized in that

(a) the numbers of which the mean is to be taken are compared with each other and

(b) only such numbers are utilized for the taking of the mean, the deviations of which from the other numbers are below a predetermined threshold, and

(c) an error signal is triggered, when a deviation is above the threshold.

4. Method as claimed in anyone of claims 1 to 3, characterized in that said positioning of the workpiece (10) is effected on the unbalance measuring machine.

5. Method as claimed in claim 4, characterized in that the workpiece (10) in the predetermined position is provided with a mark indicating the position of the unbalance.

6. Method as claimed in anyone of claims 1 to 3, characterized in that

(a) said positioning of the workpiece (114) is effected on an unbalance correcting machine (112) separate from the unbalance measuring machine (110), the workpiece (114) being mounted in said unbalance correcting machine (112) on supporting rollers the diameter of which is equal to the diameter of the supporting rollers of the unbalance measuring machine (110),

(b) with each revolution of one of the supporting rollers of the unbalance correcting machine (112) a sequence of angle increment signals synchronized therewith is generated, said angle increment signals corresponding to the same angle increments as the angle increments signals generated during the measuring run,

(c) when the workpiece (114) is positioned on the unbalance correcting machine (112), a reference pulse is generated, when the workpiece (114) assumes a particular, predetermined angular position on the unbalance correcting machine (112),

(d) the angle increment signals generated when the workpiece is positioned on the unbalance correcting machine, are counted from this latter reference pulse, and

(e) the number thus counted is compared to the number determined and stored on the unbalance measuring machine (110), the positioning procedure being terminated when a predetermined relation between these numbers has been reached.

7. Device for carrying out the method claimed in claim 1, with an unbalance measuring machine comprising

(a) a device (40, 122) for generating unbalance measuring signals, which represent, both with respect to amount and position, the unbalance to be measurede (10, 114),

(b) a contact-free pick-off device (26, 124) which is arranged to pick-off a mark (36, 126) on the workpice (10, 114) to generate a reference signal (62), the mark (36, 126) being detected by the pick-off device (38, 124) in a predetermined angular position,

(c) a signal shaping circuit (44, 130) to which the unbalance measuring signal is applied to generate a puls-like unbalance position signal which has a fixed, predetermined phase relation with the unbalance measuring signal,

(d) a counter (60, 134) arranged to be switched on by the reference signal (62) and to be switched off by the unbalance position signal,

(e) means for generating a count signal sequence the count signals of which are in relation with the revolution of the workpiece and applied to the counter (60, 134), and

(f) means for rotating the workpiece (10, 114) starting from a predetermined angular position, in which the mark (36, 126) generates a reference signal, through an angle determined by the count, characterized in that

(g) the workpiece (10, 114) is mounted in the unbalance measuring machine on supporting rollers (16, 18),

(h) an angle increment signal generator (46) is provided at a supporting roller (18) of the unbalance measuring machine (110), which angle increment signal generator generates, as said count signals, a sequence of angle increment signals which are controlled by the rotation of this supporting roller (18) and each one of which corresponds to a fixed angle increment of the supporting roller (18), and

(i) the workpiece (10, 114) is rotational by the means for rotating the workpiece on the same or corresponding supporting rollers for positioning the unbalance in a predetermined angular position, and

(j) the said means for rotating the workpiece (10, 114) are arranged to be controlled in function of angle increment signals of the same angle increment signal generator (46) or an angle increment signal generator (15) coupled to a supporting roller corresponding to the said supporting roller and to its rotation, until the number of the angle increment signals related to the supporting rollers are equal to the count of the counter (60, 134).

8. Device as claimed in claim 7, characterized in that for the determination of the angle of rotation of the workpiece (10, 114),

(a) a counter (76, 134) which has been set to the stored number of angle increment signals, is arranged to be counted down by further angle increment signals from supporting rollers (18), on which the workpiece (10, 114) is mounted, and

(b) the count-down is initiated by a reference signal generated when the mark is picked-off, a predetermined count of this counter (76, 134) signalizing the correct positioning of the workpiece (10, 114).

9. Device as claimed in claim 8, characterized in that

(a) the angle increment signal generator (46, 135) is adapted to generate signals depending on the sense of rotation, and

(b) the counter (76, 134) is a bidirectional counter, the direction of counting of which is determined as a function of the sense of rotation of the workpiece (10, 114) by said signals depending on the sense of rotation.

10. Device as claimed in anyone of claims 7 to 9, characterized in that the angle increment signal generator forms part of the supporting roller.

11. Device as claimed in anyone of claims 7 to 9, characterized in that the angle increment signal generator (46, 132, 135) is a component separate from the supporting roller (18) and in driving connection with the supporting roller (18).

12. Device as claimed in anyone of claims 7 to 11, characterized by

(a) a memory (72) which is arranged to store, with a measuring run, consecutively the number of angle increment signals counted by the counter during the various revolutions of the workpiece, and

(b) a mean taking device (74) for taking the means of the stores numbers as a measure of the rotation required for the positioning of the workpiece.

13. Device as claimed in anyone of claims 7 to 12, characterized by a marking device (96) on the unbalance measuring machine, said marking device being adapted to apply a mark indicating the position of the unbalance to the workpiece (10) after the workpiece (10) has been positioned.

14. Device as claimed in anyone of claims 7 to 12, characterized in that

(a) an unbalance measuring machine (110) and an unbalance correcting machine (112) are provided,

(b) the unbalance measuring machine (110) and the unbalance correcting machine (112) have identical supporting rollers for mounting the workpiece (114),

(c) the unbalance measuring machine (110) and the unbalance correcting machine (112) each have an angle increment signal generator (132, 135) at a respective supporting roller, the two angle increment signal generators (132, 135) being fungctionally identical,

(d) a contact-free pick-off device (124, 136) is arranged on each of the unbalance measuring machine (110) and the unbalance correcting machine (112) to pick-off a mark (126) on the workpiece for generating a reference signal, and

(e) the counting-up of the angle increment signals during the measuring run on the unbalance measuring machine (110) is initiated by the reference signal generated by the pick-off device (124) of the unbalance measuring machine (110), and the counting-down during the positioning procedure on the unbalance correcting machine is initiated by the reference signal generated by the pick-off device (136) of the unbalance correcting machine (122).

15. Device as claimed in anyone of claims 7 to 14, characterized in that

(a) a stepping motor for positioning the workpiece is coupled to said one supporting roller, and

(b) the stepping motor, at the same time, serves as said angle increment signal generator, the signals generated by the stepping motor or the stepping signals supplied to the stepping motor serving as angle increment signals.

**Revendications**

1. Procédé pour positionner une pièce à travailler et à debalourder de sorte que le balourd mesuré occupe une position prédéterminée, avec les étappes de procédé

(a) montage de la pièce à travailler sur des rouleaux porteurs dans une machine de mesure de balourd,

(b) entraînement de la pièce à travailler dans une course de mesure afin d'engendrer des forces de balourd,

(c) génération d'un signal de mesure de balourd representant le balourd en grandeur et position lors de la course de mesure,

(d) génération d'un signal de position de balourd representant la position de phase du signal de mesure de balourd, à partir du signal de mesure de balourd,

(e) génération d'un signal de référence lors de chaque passage de la pièce à travailler, lorsque la pièce a travailler occupe une certaine position angulaire prédéterminée,

(f) génération de séquences de signaux d'incrément angulaire au moyen d'un capteur de signal d'incrément angulaire (46) couplé à l'un des rouleaux porteurs (18) et à sa rotation et prevoyant un signal à chaque rotation du rouleau porteur (18) d'un increment angulaire fixe,

(g) comptage des signaux d'incrément angulaire du signal de référence au signal de position de balourd impulsionnel,

(h) mémorisation du résultat du comptage, et

(i) positionnement en tournant la pièce à travailler dans le sens de rotation de la course de mesure, sur des rouleaux porteurs identiques ou correspondants de sorte que partant de la position angulaire prédeterminée utilisée pour la génération du signal de référence, des signaux d'incrément angulaire sont comptés, provenant d'un capteur de signal d'incrément angulaire (48) couplé à la rotation du rouleau porteur (18), et associés aux mêmes incréments angulaires fixes que lors de la course de mesure, jusqu'à ce que le nombre des signaux d'incrément angulaire ainsi compté est égal au résultat mémorisé du comptage effectué lors de la course de mesure, le balourd de la pièce à travailler étant alors situé sur une position prédéterminée.

2. Procédé selon la revendication 1, caractérisé par le fait que

(a) à chaque course de mesure le nombre de signaux d'increment angulaire (70) apparaîssant entre le signal de référence (62) et le signal de position de balourd (66) est déterminé pour plusieurs rotations de la pièce à travailler, et

(b) une valeur moyenne formée a partir des nombres de signaux d'incrément angulaire ainsi obtenus est mémorisée.

3. Procédé selon la revendication 2, caractérisé par le fait que

(a) les nombres de signaux d'incrément angulaire dont il faut faire la moyenne sont comparés, et

(b) pour former la moyenne ne sont pris en compte que ceux des nombres de signaux d'incrément angulaire dont les déviations des autres sont inférieures à une valeur seuil prédéterminée, et

(c) un signal d'erreur est déclenché lorsqu'une déviation est supérieure à la valeur seuil.

4. Procédé selon l'une des revendications 1 à 3, caractérisé par le fait que le positionnement de la pièce à travailler (10) est effectué sur la machine de mesure de balourd.

5. Procédé selon la revendication 4, caractérisé par le fait que, dans la position prédéterminée, la pièce a travailler (10) est pourvue d'une marque indicant la position du balourd.

6. Procédé selon l'une des revendications 1 à 3, caractérisé par le fait que

(a) le positionnement de la pièce à travailler (114) est effectué sur une machine de compensation de balourd (112) séparée de la machine de mesure de balourd (110) et sur laquelle la pièce à travailler (114) est montée sur des rouleaux porteurs dont le diamètre est égal au diamètre des rouleaux porteurs de la machine de mesure de balourd (110),

(b) à chaque rotation de l'un des rouleaux porteurs de la machine de compensation de balourd (110), est engendrée une séquence de signaux d'incrément angulaire synchronisés avec celles-ci et qui sont égaux à des incréments angulaires tels ceux engendrés lors de la course de mesure,

(c) lors du positionnement de la pièce à travailler (114) sur la machine de compensation de balourd (112) une impulsion de référence est engendrée lorsque la pièce à travailler (114) occupe une certaine position angulaire prédéterminée sur la machine de compensation de balourd (112).

(d) les signaux d'increment angulaire engendrés lors du positionnement de la pièce a travailler (114) sur la machine de compensation de balourd (112) sont comptés depuis cette dernière impulsion de reference, et

(e) le nombre ainsi compté est comparé au nombre déterminé et memorisé sur la machine de mesure de balourd (110), le procédé de positionnement étant terminé lorsqu'une relation prédéterminée de ces nombres est obtenue.

7. Dispositif déstiné à réaliser le procédé selon la revendication 1, ayant une machine de mesure de balourd comprenant

(a) un dispositif (40, 122) déstiné a engendrer des signaux de mesure du balourd qui représentent le balourd à mesurer de la pièce à travailler (10, 114) en grandeur et position,

(b) un dispositif d'échantillonnage (38, 124) fonctionnant sans contact qui peut explorer une marque (36, 126) sur la pièce a travailler (10, 114) afin d'engendrer un signal de référence (62), la marque (36, 126) étant détectée par le dispositif d'échantillonnage (38, 124) dans une position angulaire prédéterminée,

(c) un circuit de formation de signaux (44, 134) auquel est appliqué le signal de mesure de balourd afin d'engendrer un signal de position de balourd impulsionnel qui a une relation de phase fixe prédéterminée au signal de mesure de balourd,

(d) un compteur (60, 134) qui peut être mis en circuit par le signal de référence (62) et hors circuit par le signal de position de balourd impulsionnel, et

(e) des moyens déstinés à engendrer une séquence de signaux de comptage dont les signaux de comptage sont en relation à la rotation de la pièce à travailler et appliqués au compteur (60, 134), et

(f) des moyens déstinés à tourner la pièce à travailler (10, 114), partant d'une position angulaire prédéterminée dans laquelle la marque (36, 126) engendre un signal de référence, d'un angle determiné par la position du compteur,

caracterisé par le fait que

(g) la pièce à travailler (19, 114) est montée dans la machine de mesure de balourd sur des rouleaux porteurs (16, 18),

(h) un capteur de signal d'increment angulaire (46) est monté sur l'un des rouleaux porteurs (18) de la machine de mesure de balourd (110) et engendre en tant que lesdits signaux de comptage, une séquence de signaux d'incrément angulaire commandés par la rotation de ce rouleaux porteurs (18) et correspondant respectivement à un incrément angulaire fixe, et

(i) la pièce à travailler (10, 114) est rotative par les moyens déstinés à tourner la pièce à travailler sur les rouleaux porteurs identiques ou correspondants afin de positionner le balourd dans une position angulaire prédéterminée, et

(j) lesdits moyens déstinés à tourner la pièce à travailler (10, 114) peuvent être commandés, en fonction de signaux d'incréments angulaires, par le capteur de signal d'incrément angulaire identique (150) ou couplé à un rouleau porteur correspondant audit rouleau porteur et à sa rotation, jusqu'à ce que le nombre des signaux d'incrément angulaire en rapport avec les rouleaux porteurs est égal à la position du compteur (60, 134).

8. Dispositif selon la revendication 7, caractérisé par le fait que, afin de déterminer l'écart angulaire de la pièce à travailler (10, 114)

(a) un compteur (76, 134) qui est mis au nombre de signaux d'incrément angulaire memorisé peut être décompté par d'autres signaux d'incrément angulaire de rouleaux porteurs (18) portant la pièce à travailler (10, 114), et

(b) le decomptage peut être déclenché par un signal de référence engendré lors de l'échantillonnage de la marque (36, 126) sur la pièce a travailler (10, 114), une position du compteur prédéterminée de ce compteur (76, 134) signalisant le positionnement correct de la pièce a travailler (10, 114).

9. Dispositif selon la revendication 8, caracterisé par le fait que

(a) le capteur de signaux d'incrément angulaire (46, 135) est approprié à engendrer des signaux dépendant du sens de rotation, et

(b) le compteur (76, 134) est un compteur bidirectionnel dont la disposition de comptage est déterminée par les signaux dépendant du sens de rotation en fonction du sens de rotation de la pièce à travailler (10, 114).

10. Dispositif selon l'une des revendications 7 à 9, caractérisé par le fait que le capteur de signal d'incrément angulaire forme une partie du rouleau porteur.

11. Dispositif selon l'une des revendications 7 à 9, caractérisé par le fait que le capteur de signal d'incrément angulaire (46, 132, 135) est un élément de construction séparé du rouleau porteur (18) mais qui est en connexion de commande avec le rouleau porteur (18).

12. Dispositif selon l'une des revendications 7 à 11, caractérisé par

(a) une mémoire (72) qui, à une course de mesure, peut mémoriser succéssivement les nombres de signaux d'incrément angulaire comptés par le compteur lors de rotations différentes de la pièce a travailler, et

(b) un circuit de formation de moyenne (74) déstiné à former la moyenne des nombres mémorisés comme mesure pour la rotation nécessaire au positionnement de la pièce à travailler.

13. Dispositif selon l'une quelconque des revendications 7 à 12, caractérisé par un dispositif de marquage (96) sur la machine de mesure de balourd par lequel, après avoir positionné la pièce à travailler(10), une marque indiquant la position du balourd peut être appliquée sur la pièce à travailler (10).

14. Dispositif selon l'une quelconque des revendications 7 à 12, caractérisé par le fait que

(a) une machine de mesure de balourd (110) et une machine de compensation de balourd (112) sont prévues,

(b) la machine de mesure de balourd (110) et la machine de compensation de balourd (112) présentent des rouleaux porteurs du même type pour le montage de la pièce à travailler (114),

(c) la machine de mesure de balourd (110) et la machine de compensation de balourd (112) présentent chacune sur un rouleau porteur un capteur de signal d'incrément angulaire (132, 135), ces deux capteurs de signal d'incrément angulaire (132, 135) étant du même type quant à leur fonction,

(d) sur la machine de mesure de balourd (110) et sur la machine de compensation de balourd (112) est disposé respectivement un dispositif d'échantillonnage (124, 136) sans contact qui peut explorer une marque (126) à la fois sur la pièce à travailler (14) afin d'engendrer un signal de référence, et

(e) le comptage des signaux d'incrément angulaire peut être déclenché lors de la course de mesure sur la machine de mesure de balourd (110) par le signal de référence engendré par le dispositif d'échantillonnage (124) de la machine de mesure de balourd (110), et le décomtage peut être déclenché lors du positionnement sur la machine de compensation de balourd (112).

15. Dispositif selon l'une quelconque des revendications 7 à 14, caractérisé par le fait que

(a) un moteur pas-à-pas destiné à positionner la pièce à travailler est raccordé audit rouleau porteur, et

(b) le moteur pas-à-pas forme en même temps le capteur de signal d'incrément angulaire par le fait que les signaux de commutation pas-à-pas fournis par ou alimenté au moteur pas-à-pas servent de signaux d'incrément angulaire.

*Fig.1*

Fig. 2

Fig. 3

/100

TORSCHALTUNG

/102

$$\overline{m_n} = \frac{m_1 + m_2 \dots m_n}{n}$$

KOMPARATOR — 98

$\left|m_{n+1} - m_n\right| < a$

*Fig. 4*

FEHLER
SIGNAL   $\left|m_{n+1} - m_n\right| > a$

— 104

Fig.5

EP 0 085 873 B2